(19) **Europäisches Patentamt European Patent Office Office européen des brevets**

(11) **EP 4 332 825 A1**

(12) **EUROPEAN PATENT APPLICATION**
published in accordance with Art. 153(4) EPC

(43) Date of publication:
06.03.2024 Bulletin 2024/10

(21) Application number: 21938817.0

(22) Date of filing: 27.08.2021

(51) International Patent Classification (IPC):
*G06F 119/14* (2020.01)

(86) International application number:
**PCT/CN2021/114892**

(87) International publication number:
**WO 2022/227353 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 27.04.2021 CN 202110462452

(71) Applicants:
• **Huaneng Clean Energy Research Institute**
  **Beijing 102209 (CN)**
• **Huaneng Offshore Wind Power Science and Technology**
  **Research Co., Ltd**
  **Yancheng, Jiangsu 224007 (CN)**

(72) Inventors:
• **ZHOU, Yiming**
  **Beijing 102209 (CN)**
• **LIU, Xin**
  **Beijing 102209 (CN)**
• **GUO, Xiaojiang**
  **Beijing 102209 (CN)**
• **LI, Weidong**
  **Beijing 102209 (CN)**
• **YAN, Shu**
  **Beijing 102209 (CN)**
• **ZHANG, Bo**
  **Yancheng, Jiangsu 224007 (CN)**

(74) Representative: **Manna, Sara et al**
**Società Italiana Brevetti S.p.A.**
**Piazza di Pietra, 39**
**00186 Roma (IT)**

(54) **INTEGRATED COST-REDUCING OPTIMIZATION DESIGN METHOD FOR SUPPORT STRUCTURE OF OFFSHORE WIND TURBINE**

(57) Disclosed in the present invention is an integrated cost-reducing optimization design method for a support structure of an offshore wind turbine. Under the condition that a full-field design is given, a cost-reducing optimization design is performed to provide an implementation process and technical means; according to existing design control factors of an actual project, targeted improvement and an iterative design are performed by adopting multiple technical means such as: (1) selecting a suitable machine site, and a wind parameter, a water depth and a geological exploration parameter thereof; (2) an integrated load; (3) an optimal control policy; (4) improving a damping ratio; (5) a damper; (6) using a novel shoot-nail connection; (7) a mud-surface accumulative deformation algorithm; (8) a large-diameter pile-soil effect; (9) adjusting a tower configuration; (10) adjusting a tower, a basic diameter and a root distance; (11) releasing a frequency range to 1P and 3P control; (12) refining the geological exploration parameter; (13) increasing a diameter-to-thickness ratio; and (14) shortening a pile length, and a unit-control-tower-foundation integrated design can be performed in order to seek a global optimal design, such that a design load of the support structure can be effectively reduced, the construction cost of the support structure is reduced, and the kilowatt-hour cost of offshore wind power is reduced.

EP 4 332 825 A1

FIG. 2

**Description**

**CROSS-REFERENCE TO RELATED APPLICATION**

This application claims priority to Chinese Patent Application No. 202110462452.1, entitled "INTEGRATED COST-REDUCING OPTIMIZATION DESIGN METHOD FOR OFFSHORE WIND TURBINE SUPPORT STRUCTURE", filed with the China National Intellectual Property Administration on April 27, 2021, the entire content of which is incorporated herein by reference.

**FIELD**

The present disclosure belongs to the design technical field of a support structure of an offshore wind turbine generator set, and particularly relates to an integrated cost-reducing optimization design method for an offshore wind turbine support structure.

**BACKGROUND**

Offshore wind power resources have abundant reserves, large scale potential, and excellent power quality, and are close to a load center. Technological exploitation of the wind power resources at a height of 100 m in a water area with a water depth of 5 to 25 m and a water area with a water depth of 25 to 50 m is 210 million kW and 190 million kW, respectively, which can provide an important strategic support for the transformation of China's energy structure. However, the development of offshore wind power is facing the pressure of cost reduction, which is far from parity. At present, it is difficult for the existing offshore wind power products and technologies to realize parity, the increment of new bidding is limited, and the newly installed capacity declines. This requires the whole industry to break through technical barriers, realize industrial chain coordination, speed up technological innovation based on engineering experience of actual projects, and finally realize the grid parity of the offshore wind power.

In the total investment cost of the offshore wind power, a wind turbine support structure (including a tower and a foundation) accounts for about 22%, so reducing the cost of the offshore wind turbine support structure can effectively reduce the cost per kilowatt hour. At present, in offshore wind power projects, a top load of the foundation and a quality of the tower provided by a wind turbine manufacturer will be graded in wind turbine bidding, but a quality of the foundation provided by a design institute is seldom graded in design bidding. In the detailed design stage after the biddings, the wind turbine manufacturer and the design institute will respectively optimize the tower and the foundation in turn. In this process, the wind turbine manufacturer and the design institute do not adopt an integrated experimental design method, so in the actual engineering project, the following case occurs, that is, the tower is very light, but the foundation is very heavy; a lower frequency limit of the whole support structure is controlled by a load applicable frequency range which is not determined by 1P and 3P frequencies. Tower segments are all cone segments, which leads the design institute to enlarge the single pile diameter to compensate for the frequency to make it reach the lower limit requirement. These have caused the users to pay more unnecessary costs.

In 2012, Rad Haghi et al. optimized both the tower and the wall thickness of the single pile foundation of Siemens offshore SWT3.6-107 model, the optimization takes a minimum mass of the overall support structure as an objective function, and takes local and global buckling, frequency and fatigue damage of the structure as constraints, and finally achieves a weight reduction of 12.1%. In 2012, in a project in Beihai, Germany, T. Fischer et al. took reducing an aerodynamic load of a support structure as an objective function, reduced a fatigue load of the support structure by optimizing a control strategy, and reduced a weight of the whole support structure by 9%. In 2017, Theo Gentils et al. used a finite element method to analyze the support structure, the results show that the fatigue and frequency are the main control constraints, and a weight reduction of 19.8% is achievable by optimizing geometric parameters of the support structure through a genetic algorithm.

Some researchers proposed optimization designs in structure. In 2014, Zhao Xiangqian et al. proposed that it is expected to reduce the cost by 10% through the overall design, optimization of control strategies and blades, and relaxation of frequency constraints in the integrated design of the generator set and foundation. In 2016, Zhang Bo et al. studied an integrated load simulation method of an offshore wind turbine, compared differences between a semi-integrated load simulation and an integrated load simulation, and verified through designed cases that the integrated load simulation method can effectively optimize a foundation design and reduce the cost of a wind farm. In 2019, Tian De et al. considered the influence of a foundation on an ultimate design load, and optimized a support structure of a 5MW offshore single pile wind turbine with a goal of minimizing a structural weight under considering the condition of foundation flexibility, and an overall weight was reduced by 7.14%. In 2019, Zhou Yiming et al. compared a process and an optimization formula of an integrated optimization design method and a stepwise iterative design method, and expanded the design domain to the integrated support structure to find a global optimal design.

However, the above research works do not integrate fine processing of environmental parameters, a unit-control-tower-foundation integrated design, and the improvement of standard specification parameters to form a systematic scheme for the domestic offshore wind power industry.

**SUMMARY**

In order to solve the problems existing in the related art, the present disclosure provides an optimization design method of an offshore wind turbine support structure based on a proxy model, which meets and completes the requirements of cost-reducing, innovation and achievement declaration of engineering projects, breakthrough the offshore wind turbine-tower-foundation integrated optimization design technology, and solves the problem of separate design of a support structure.

In order to achieve the above purposes, the technical solution adopted in the present disclosure is an integrated cost-reducing optimization design method for an offshore wind turbine support structure, which includes the following steps.

In step 1, environmental parameters of a structure location are determined.

In step 2, it is determined whether a water depth and foundation stiffness of the structure location reach respective preset points in a wind field in which it is located or in a partition in which it is located, if no, executing step 3; if yes, executing step 4.

In step 3, ① updating the structure location and its environmental parameters is executed according to a construction sequence, the water depth of the structure location and geological condition information of the offshore wind turbine support structure, and then return to step 1.

In step 4, it is analyzed whether an ultimate strength, a fatigue strength, a deformation requirement, a frequency requirement, a diameter-thickness ratio and a pile length in a current design of the offshore wind turbine support structure are less than set values; if yes, executing step 11, if no, executing step 5.

In step 5, it is determined whether the ultimate strength is a single control factor, if no, executing step 6; if yes, performing optimization by ② adopting an integrated load and/or (3) adopting an optimal control strategy, and executing step 10.

In step 6, it is determined whether the fatigue strength is a single control factor: if no, executing step 7; if yes, performing optimization by ② adopting the integrated load, (3) adopting the optimal control strategy, ④ improving a damping ratio, ⑤ using a damper and ⑥ adopting a new nailing process, and executing step 10.

In step 7, it is determined whether the deformation requirement is a single control factor: if no, executing step 8; if yes, performing optimization by ② adopting the integrated load, (3) adopting the optimal control strategy, and ⑦ adopting a cumulative deformation algorithm of a mud surface, and executing step 10.

In step 8, it is determined whether the frequency requirement is a single control factor: if no, executing step 9; if yes, performing optimization by ⑧ adopting a large diameter pile soil effect, ⑨ adjusting a tower configuration, ⑩ adjusting a tower, a foundation diameter and a root opening, ⑪ releasing a frequency range to 1P and 3P control, and ⑫ performing fine processing of geological prospecting parameters, and executing step 10.

In step 9, it is determined whether the diameter-thickness ratio and the pile length are control factors: if no, executing step 11; if yes, performing optimization by (13) increasing the diameter-thickness ratio and ⑭ shortening the pile length, and executing step 10.

In step 10, a load-control-tower-foundation integral design is performed.

In step 11, a result of the design is obtained and the design is finished.

The load-control-tower-foundation integral design process in step 10 includes the following steps.

In step S1, a load is predicted according to a tower configuration, a tower base and a single pile diameter.

In step S2, an initial design of the tower and the foundation is given, including segmentation, a diameter, a wall thickness, and an alignment, the alignment is an outer diameter alignment, an inner diameter alignment, or a middle diameter alignment.

In step S3, an integrated modeling and an integrated load calculation are performed by using Bladed.

In step S4, optimization of a tower structure design and optimization of a foundation structure design are performed simultaneously.

In step S5, it is checked whether a convergence criterion is satisfied, which mainly includes: whether unit adaptability is satisfied, the unit adaptability includes an ultimate strength and a fatigue strength of a blade, a main bearing, a variable pitch bearing, a yaw bearing, a generator and a base; whether a difference in two adjacent frequencies of the support structure obtained is within 1%, and whether a difference in two adjacent qualities of the support structure obtained is within 1%.

In step S6, if the convergence criterion is satisfied, the iterative design is finished; if no, an integrated optimized design of the control strategy, the tower and the foundation structure is performed with the following optimization formulas, and an optimized result is returned to S3:

$$\mathrm{find:} \qquad [x_1, x_2, x_3 \ldots]$$

$$\mathrm{min:} \qquad m_{\mathrm{tower+single\ pile}}$$

$$\mathrm{subject\ to:} \qquad SRF_{1,2,3,4,5} \geq 1$$

$$\min\left(SRF_6(\theta)\right) \geq 1$$

$$Q_E \leq Q_d$$

$$UC \leq 1$$

$$\mathrm{Damage} \leq 1$$

$$\Delta_\theta \leq 0.25^\circ$$

where $[x_1, x_2, x_3 \ldots]$ is parameters of a wall thickness of the tower, a wall thickness of the single pile, and yaw, variable pitch and torque control strategies; $m_{\mathrm{tower+single\ pile}}$ is a total mass of the tower and the single pile.

In step S7, the iterative design is finished and response values are output, and the response values include a mass of the tower, a mass of the single pile, a frequency, and an ultimate load and a fatigue load of the tower base.

The integrated modeling includes both inputting an environmental condition and building a model of the support structure when performing the integrated modeling and the integrated load calculation by using Bladed. The environmental condition includes wind resource parameters, ocean hydrographic parameters, engineering geological parameters, and other special operating conditions. The special operating conditions include sea ice, an earthquake or a typhoon. The model of the support structure includes a head, a tower and a foundation, and the foundation includes a portion below the mud surface.

In the optimization method, measures of ① updating the structure location and its environmental parameters, ③ adopting the optimal control strategy, and (9) adjusting the tower configuration are applicable to all offshore wind turbines.

In the optimization method, ② adopting the integrated load is applicable to service conditions with large water depth and wave force, and the measure of (9) adjusting the tower configuration is applicable to all foundation structures.

In the optimization method, the measure of ⑩ adjusting the tower, the foundation diameter and the root opening is applicable to operating conditions with a large water depth and an uneven variation in a structure diameter and a stiffness, ⑪ releasing the frequency range to 1P and 3P control is applicable to operating conditions where a control factor is a frequency range given by a main engine plant which is narrower than [1P×110%, 3P×90%] given by a specification, and the measure of ⑫ performing the fine processing of geological prospecting parameters is applicable to operating conditions where the structure is controlled by a frequency.

In the optimization method, ⑤ using the damper is applicable to an operating condition where the structure is controlled by fatigue, and first and second order dampers are adopted to reduce a load, the measure of ⑥ adopting the new nailing connection is applicable to an operating condition where the tower is completely controlled by the fatigue strength, the measure of (13) increasing the diameter-thickness ratio is applicable to an operating condition where the wall thickness of the single pile is controlled by a construction requirement, and the wall thickness is reduced by increasing D/t, and the measure of ⑭ shortening the pile length is applicable to an operating condition where the pile length is designed robustly.

In the optimization method, the measure of ④ improving the damping ratio is applicable to a scene where the structure is controlled by fatigue, the measure of ⑦ adopting the cumulative deformation algorithm of the mud surface is applicable to a scene controlled by a mud surface corner, and the cumulative deformation algorithm of the mud surface is adopted to reduce a load by combining the ultimate strength and the fatigue strength; ⑧ adopting the large diameter pile soil effect is applicable to a large diameter single pile foundation with a pile diameter greater than 5 m.

Compared with the related art, the present disclosure has at least the following beneficial effects. As compared with an existing stepwise iterative design method for a domestic offshore support structure, the method of the present disclosure can finely process environmental parameters, perform a unit-control-tower-foundation integrated design for finding a global optimal design, improve standard specification parameters, and systematically provide an integrated design solution in cooperation with multiple parties. As a result, the method of the present disclosure can effectively reduce a design load of a support structure, reduce the weight and the cost of the support structure, and reduce the cost per kilowatt hour of the offshore wind power, meet and complete the requirements of cost-reducing, innovation and achievement declaration of engineering projects, breakthrough the offshore wind turbine-tower-foundation integrated optimization design technology, and solve the problem of separate design of a support structure.

**BRIEF DESCRIPTION OF THE DRAWINGS**

FIG. 1a is a schematic diagram of an offshore support structure.
FIG. 1b is a schematic diagram of a tower coordinate system for calculating a load of an offshore wind turbine.
FIG. 2 is a flow chart of an integrated cost-reducing optimization design method for an offshore wind turbine support structure.
FIG. 3 is a flow chart of a load-control-tower-foundation integrated iterative design process.
FIG. 4 is a schematic diagram of progress control of project implementation.

**DETAILED DESCRIPTION**

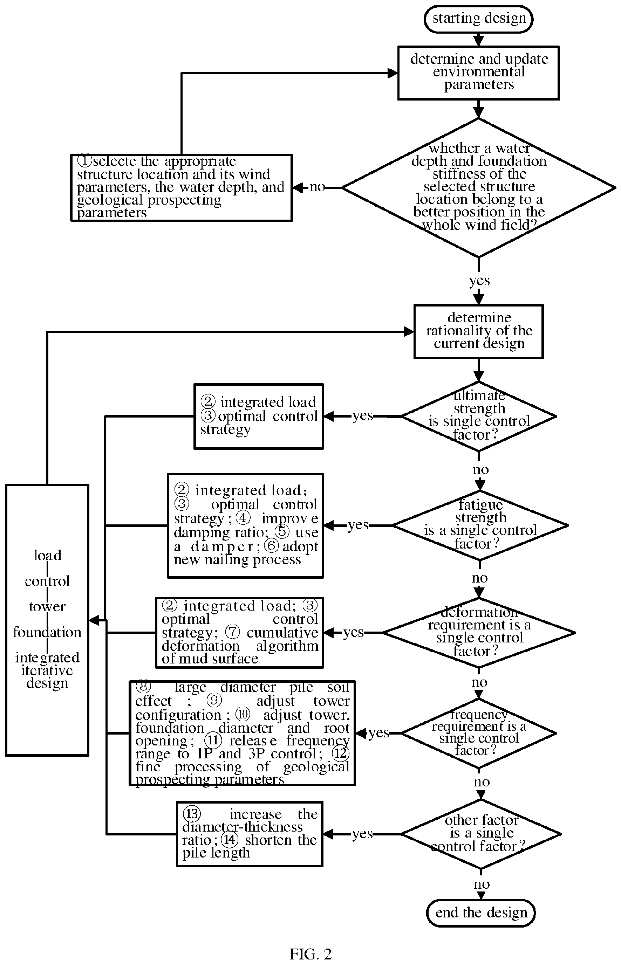

The present disclosure will be further described in detail below with reference to FIG. 2, FIG. 3, FIG. 4 and specific embodiments.

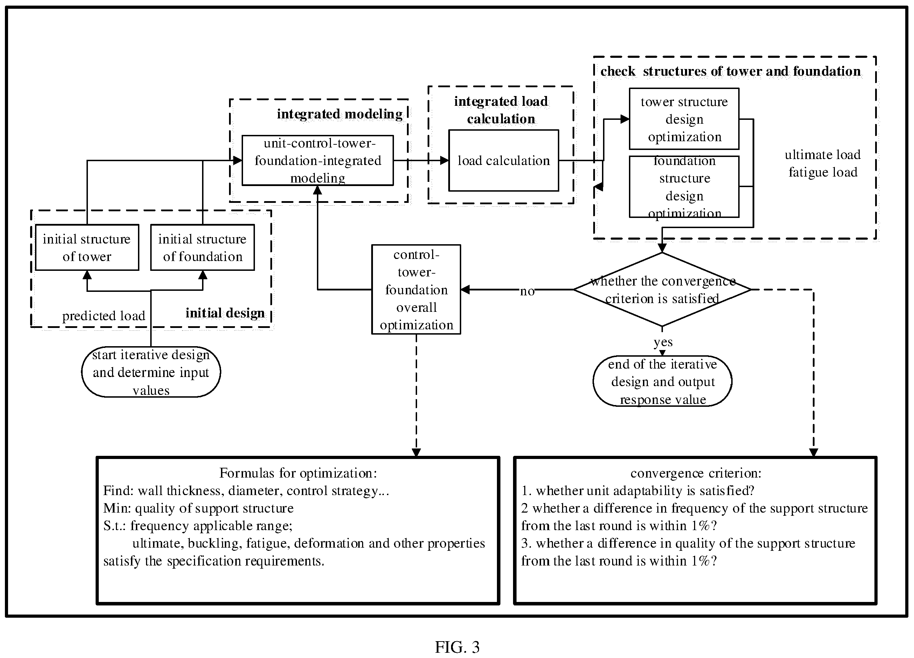

An optimization design method for an offshore wind turbine support structure based on a proxy model is provided. FIG. 3 shows a general flow chart of an optimization algorithm based on the proxy model, which generally includes the following steps. A load on the offshore support structure mainly comes from wind, waves, and currents. In an iterative calculation of the support structure, integrated modeling, load calculation, and structure design of a tower and a foundation are the main contents.

For example, the method of the present disclosure adopts a GH-Bladed software to perform the integrated modeling and the load calculation on the load of the wind turbine, and the integrated modeling includes both inputting an environmental condition and building a model of the support structure. The environmental condition includes wind resource parameters, ocean hydrographic parameters, engineering geological parameters, and other special operating conditions (sea ice, an earthquake or a typhoon); the model of the support structure includes a head, a tower and a foundation (including a portion below the mud surface). Based on operating statuses of the unit, different environmental parameters, control parameters, and operating conditions of the unit are combined to form eight design load cases (DLCs): normal power generation, power generation + fault, start-up, shutdown, emergency shutdown, idling, idling + fault, and operation and maintenance.

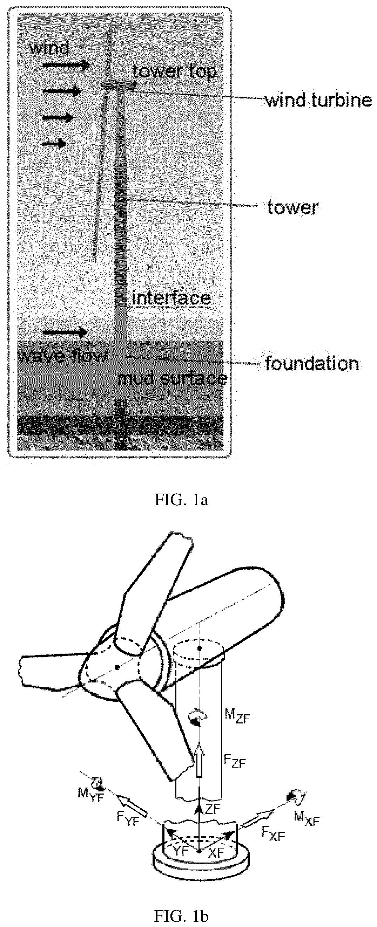

The post-processing of an ultimate load requires grouping statistics of ultimate load cases according to requirements of IEC61400-3 specification. For a constant wind case and a gust case, individual cases directly participate in best value statistics. For a turbulent wind case with 6 seeds, 12 cases with different seeds at a same wind speed are taken as a group, and a case whose result is closest to the average result of the group is selected as a target case and participate in the best value statistics. For a turbulent wind case with 12 seeds, 12 cases with different seeds at a same wind speed are taken as a group, and from first 6 cases in each group, a case whose result is closest to the average result of the first 6 cases is selected as a target case and participate in the best value statistics. Safety factors of ultimate load cases are given in Table 1. FIG. 1b provides a tower coordinate system for a load calculation of an offshore wind turbine, where the origin is located at an intersection of a tower axis and a foundation plane; XF represents a horizontal direction; ZF represents a vertical upward direction along a direction of the tower axis; and YF horizontally points to a side direction.

Considering the influence of wind and wave in different directions, the influence of an x-axis component Mx of a bending moment and a y-axis component My of the bending moment are considered in fatigue calculation of a weld joint of an offshore tower and a single pile. Firstly, load time series of Mx and My varying with time is projected in a circumferential direction of the tower, and a projection angle is within $[0,2\pi]$. Load time history components in different coordinate systems are obtained according to the method shown above, and then rain flow calculation is performed according to the traditional method to obtain a Markov matrix in each direction.

Table 1. Safety factors of ultimate load cases

| Ultimate load case | Safety factor | Ultimate load case | Safety factor |
|---|---|---|---|
| DLC1.3 | 1.35 | DLC5.1 | 1.35 |
| DLC1.4 | 1.35 | DLC6.1 | 1.35 |
| DLC1.5 | 1.35 | DLC6.2 | 1.1 |
| DLC1.6 | 1.35 | DLC6.3 | 1.35 |
| DLC2.1 | 1.35 | DLC7.1 | 1.1 |
| DLC2.2 | 1.1 | DLC8.1 | 1.5 |
| DLC2.3 | 1.1 | DLC8.2 | 1.1 |

(continued)

| Ultimate load case | Safety factor | Ultimate load case | Safety factor |
|---|---|---|---|
| DLC3.2 | 1.35 | Sea Ice | 1.35 |
| DLC3.3 | 1.35 | Earthquake | 1.0 |
| DLC4.2 | 1.35 | - | - |

**Structure design on a main body of a tower**

For example, the method of the present disclosure checks and optimizes the structures of main bodies of the tower and a single pile. The check on the structure of the main body of the tower mainly includes checks on a static strength of a cylinder wall of the tower, a stability of the tower and a fatigue strength of a tower weld.

The static strength of the cylinder wall of the tower is determined according to the fourth strength theory, and a safety factor of the static strength of the cylinder wall of the tower may be calculated according to formula (1):

$$SRF_1 = \frac{f_{y,k}}{\sigma_v \cdot \gamma_M} \geq 1 \qquad (1),$$

where $\gamma_M$ represents a safety factor of a material; $f_{y,k}$ represents a yield strength of the material, $\sigma_v$ represents an equivalent stress on each cross section of the tower.

For a tower full penetration butt weld of the first grade, non-destructive testing is required. According to DIN 18800-1, a static strength of a joint part of a weld meeting this requirement is determined by a base material, and there is no need to calculate the static strength of the weld.

The stability analysis of the tower adopts the standard DIN EN 1993-1-6. The stability analysis of a steel tower is based on the thin shell theory. Stability under an axial pressure, a shear stress, a circumferential pressure or a combined action of the above three forces is calculated respectively. Calculation methods of the stability safety factor of a cylindrical shell under an axial pressure, a shear force, a circumferential pressure or a combined action of these three forces, and a condition where the cylindrical shell does not suffer axial instability are shown in formulas (2)-(5):

$$SRF_2 = \frac{\sigma_{x,Rd}}{\sigma_{x,Ed}} \geq 1 \qquad (2),$$

$$SRF_3 = \frac{\tau_{x\theta,Rd}}{\tau_{x\theta,Ed}} \geq 1 \qquad (3),$$

$$SRF_4 = \frac{\sigma_{\theta,Rd}}{\sigma_{\theta,Ed}} \geq 1 \qquad (4),$$

$$SRF_5 = \frac{1}{\left(\frac{\sigma_{x,Ed}}{\sigma_{x,Rd}}\right)^{k_x} - k_i \cdot \left(\frac{\sigma_{x,Ed}}{\sigma_{x,Rd}}\right) \cdot \left(\frac{\sigma_{\theta,Ed}}{\sigma_{\theta,Rd}}\right) + \left(\frac{\sigma_{\theta,Ed}}{\sigma_{\theta,Rd}}\right)^{k\theta} + \left(\frac{\tau_{x,Ed}}{\tau_{x,Rd}}\right)^{k_\tau}} \geq 1 \qquad (5),$$

where $\sigma_{x,Rd}$ represents a critical stress value of the axial instability of the cylindrical shell; $\sigma_{x,Ed}$ represents a calculated stress value of the axial instability of the cylindrical shell; $\tau_{x\theta,Rd}$ represents a critical stress value of actual shear instability of the cylindrical shell; $\tau_{x\theta,Ed}$ represents a calculated stress value of the shear instability of the cylindrical shell; $\sigma_{\theta,Rd}$ represents a critical stress value of circumferential instability of the cylindrical shell; $\sigma_{\theta,Ed}$ represents a calculated stress value of the circumferential instability of the cylindrical shell; $k_x$, $k_\tau$, $k_\theta$, and $k_i$ represent dimensionless parameters.

Fatigue calculation of the tower weld adopts the nominal stress method. There are three types of tower welds, namely, a longitudinal weld, a transverse weld and an internal attachment weld. The most unfavorable fatigue design grade among the three types of tower welds is selected for the calculation. Cumulative fatigue damage of the tower weld can be obtained according to the obtained Markov matrix and an S-N curve, and the fatigue safety factor of the tower weld needs to satisfy a condition of the following formula (6):

$$SRF_6 \geq 1 \qquad (6).$$

**Structure design on a main body of a single pile**

Check on the main body structure of a single pile foundation mainly includes checks on an axial bearing capacity, a UC value of an ultimate case node, a fatigue strength, and a corner of a mud surface.

The formula for checking a vertical bearing capacity of the single pile foundation is:

$$Q_E \leq Q_d \qquad (7),$$

where $Q_d$ represents a design value of the axial bearing capacity of a single driven pile; and $Q_E$ represents a calculated value of the axial bearing capacity of the single driven pile.

A cylindrical member subjected to a combined action of compression and bending, a combined action of tension and bending, and a combined action of axial tension and circumferential compression shall satisfy the following formula (8) at all points of its full length:

$$UC \leq 1 \qquad (8).$$

Fatigue analysis of the single pile foundation structure shall comply with the relevant provisions of the current national standard "Recommended Practice for Fatigue Strength Analysis of Offshore Steel Structures" (SY/T 10049). Cumulative fatigue damage of a weld can be obtained according to the Markov matrix and the S-N curve, and a fatigue damage value (Damage) of a single pile weld should satisfy the following condition:

$$Damage \leq 1 \qquad (9).$$

According to the DNVGL-ST-0126 specification, a total corner of the single pile at the mud surface should not exceed 0.5°, including an installation deviation angle of the single pile at the mud surface and a permanent cumulative corner deformation. Usually, the verticality of the pile body after sinking is controlled at 0.25° (i.e., the installation deviation angle is within 0.25°). An allowable value $\Delta\theta$ of a permanent cumulative mud surface corner of the pile foundation in calculation is 0.25°, i.e.:

$$\Delta_\theta \leq 0.25^\circ \qquad (10).$$

In addition, deformation of the single pile needs to be checked by the following three indexes:

a) a horizontal displacement of the mud surface does not exceed L/500 (L is a depth of the pile into the soil);
(b) a displacement of a tip of the pile does not exceed an allowable value (usually a smaller value of L/5000 and 10 mm is taken as the allowable value); and
c) a maximum settlement of the foundation does not exceed 100 mm.

**Load-control-tower-foundation iterative design flow**

FIG. 1a provides a single pile foundation structure of an offshore wind turbine, including a wind turbine, a tower, and the single pile foundation, which suffer from the action from wind, wave, and current, and the constraint of rock and soil. The load-control-tower-foundation integrated design includes the following steps.

In step S1, a load is predicted according to a tower configuration, a tower base and a single pile diameter.

In step S2, an initial design of the tower and the foundation is given, including segmentation, a diameter, a wall thickness, and other information.

In step S3, an integrated modeling and an integrated load calculation are performed by using Bladed.

In step S4, optimization of a tower structure design and optimization of a foundation structure design are performed simultaneously.

In step S5, it is checked whether a convergence criterion is satisfied, the convergence criterion includes whether unit adaptability is satisfied; whether a difference in frequency of a support structure from the last round is within 1%; whether a difference in quality of the support structure from the last round is within 1%, the unit adaptability includes an ultimate strength and a fatigue strength of a blade, a main bearing, a variable pitch bearing, a yaw bearing, a generator and a base.

In step S6, if the convergence criterion is satisfied, the iterative design is finished; if no, an integrated optimized design of the control strategy, the tower and the foundation structure is performed with the following optimization formulas, and an optimized result is returned to S3:

$$\mathrm{find}: \quad [\, x_1\, ,\, x_2\, ,\, x_3 \ldots ]$$

$$\mathrm{min}: \quad m_{\mathrm{tower+single\ pile}}$$

$$\mathrm{subject\ to}: \quad SRF_{1,2,3,4,5} \geq 1$$

$$\min\left(SRF_6\left(\theta\right)\right) \geq 1$$

$$Q_E \leq Q_d$$

$$UC \leq 1$$

$$\mathrm{Damage} \leq 1$$

$$\Delta_\theta \leq 0.25^\circ$$

where $[x_1\, ,\, x_2\, ,\, x_3 \ldots]$ is parameters of a wall thickness of the tower, a wall thickness of the single pile, and yaw, variable pitch and torque control strategies; $m_{\mathrm{tower+single\ pile}}$ is a total mass of the tower and the single pile.

The method of the present disclosure provides an integrated cost-reducing optimization design method for an offshore wind turbine support structure, which performs targeted improvement and iterative design by ① selecting an appropriate structure location and its wind parameters, a water depth, and geological prospecting parameters, ② adopting an integrated load, ③ adopting an optimal control strategy, ④ improving a damping ratio, ⑤ using a damper, ⑥ adopting a new nailing connection, ⑦ adopting a cumulative deformation algorithm of a mud surface, ⑧ adopting a large diameter pile soil effect, ⑨ adjusting a tower configuration, ⑩ adjusting a tower, a foundation diameter and a root opening, ⑪ releasing a frequency range to 1P and 3P control, ⑫ performing fine processing of geological prospecting parameters, ⑬ increasing the diameter-thickness ratio, ⑭ shortening the pile length, and other technical methods.

FIG. 2 provides a specific technical process.

1) A design is started.

2) Environmental parameters of a structure location are determined and updated.

3) Whether a water depth and foundation stiffness of the selected structure location belong to a better position in a whole wind field (or a partition where it is located)? if no, executing step 4; if yes, executing step 5.

4) ① An appropriate structure location and its environmental parameters are selected, according to a construction sequence, the water depth, geological condition, and other information. Return to step 2.

5) Rationality of the current design is analyzed, whether margins of an ultimate strength, a fatigue strength, a deformation requirement, a frequency requirement, and local and global buckling of a structure are smaller. If yes, executing step 11, if no, executing step 5.

6) It is determined whether the ultimate strength is a single control factor: if no, executing step 7; if yes, performing optimization by ② adopting an integrated load, and (3) adopting an optimal control strategy, and executing step 11.

7) It is determined whether the fatigue strength is a single control factor: if no, executing step 8; if yes, performing optimization by ② adopting the integrated load, ③ adopting the optimal control strategy, ④ improving a damping ratio, ⑤ using a damper, and ⑥ adopting a new nailing process, and executing step 11.

8) It is determined whether the deformation requirement is a single control factor: if no, executing step 9; if yes, performing optimization by ② adopting the integrated load, (3) adopting the optimal control strategy, and ⑦ adopting a cumulative deformation algorithm of a mud surface, and executing step 11.

9) It is determined whether the frequency requirement is a single control factor: if no, executing step 10; if yes, performing optimization by ⑧ adopting a large diameter pile soil effect, (9) adjusting a tower configuration, ⑩ adjusting a tower, a foundation diameter and a root opening, ⑪ releasing a frequency range to 1P and 3P control, and ⑫ performing fine processing of geological prospecting parameters, and executing step 11.

10) It is determined whether the local and global buckling of the structure are control factors: if no, executing step 12; if yes, performing optimization by (13) increasing the diameter-thickness ratio and ⑭ shortening the pile length, and executing step 11.

11) A load-control-tower-foundation integral design is performed.

12) The design is finished.

The maturity, applicable scenes and effects of 14 technical methods adopted in the integrated cost-reducing optimization design method for the offshore wind turbine support structure of the present disclosure are as follows:

Table 2. Maturity and application scenes of individual technical methods

| Technical Maturity | Technical Solutions | Applicable scenes and effects |
|---|---|---|
| technologies are mature and can be adopted directly | ① selecting an appropriate structure location and its wind parameters, a water | universally applicable to all scenes, when the wind field, the water depth and geological |
| | depth, and geological prospecting parameters | conditions vary greatly, it is generally expected to reduce the load by 5% to 10% |
| | ② integrated load | applicable to the scene where the water depth and the wave force are larger, Bladed is used to extract the integrated load, and it is generally expected to reduce the load by 5% to 8% |
| | ③ optimal control strategy | universally applicable to all scenes to overall coordinate ultimate loads and fatigue loads of components, and it is generally expected to reduce the load by more than 5% |
| | ⑨ adjusting the tower configuration | applicable to all scenes of the foundation structure, especially to a single pile foundation, and it is generally expected to reduce the weight by more than 3% |
| | ⑩ adjusting the tower, the foundation diameter and the root opening | applicable to a scene where the water depth is larger, and the structure diameter and stiffness vary unevenly, and it is generally expected to reduce the weight by more than 5% |
| | ⑪ releasing the frequency range to 1P and 3P control | applicable to a scene where a solution control factor is a frequency range given by a main engine plant, which is narrower than [1P×110%, 3P×90%] given by the specification, and it is generally expected to reduce the weight by about 3% |
| | ⑫ performing fine processing of geological prospecting parameters | applicable to a scene where the structure is controlled by the frequency, the stiffness of the structure can be improved by performing the fine processing on the geological prospecting date, and it is generally expected to reduce the load by about 3% |
| need to be approved by the main engine plant or the design institute | ⑤ using the damper | applicable to a scene where the structure is controlled by fatigue, the first and second order dampers can be adopted to reduce the load, it is generally expected to reduce the load by more than 5% to 10%, but the purchase costs of the dampers and construction period need to be increased |
| | ⑥ adopting the new nailing connection | applicable to a scene where the tower is completely controlled by the fatigue strength, and it is generally expected to reduce the weight by 3 to 5% |

(continued)

| Technical Maturity | Technical Solutions | Applicable scenes and effects |
|---|---|---|
| the specification does not clearly give the recommended practice, which need to be verified | ⑬ increasing the diameter-thickness ratio | applicable to a scene where the wall thickness of the single pile is controlled by a construction requirement, the wall thickness can be reduced by increasing D/t, and it is generally expected to reduce the weight by about 1% |
| | ⑭ shortening the pile length | applicable to a scene where the pile length is designed robustly, a design index can be reduced from 5% to 1%, and it is generally expected to reduce the weight by 2 to 3% |
| | ④ improving the damping ratio | applicable to a scene where the structure is controlled by fatigue, and a structural damping can be increased from 0.5% to 0.8% to 1.0%, and it is generally expected to reduce the load by more than 5% |
| | ⑦ the cumulative deformation algorithm of the mud surface | applicable to a scene controlled by a mud surface corner, the cumulative deformation algorithm of the mud surface can be adopted to reduce a load by combining the ultimate strength and the fatigue strength, and it is generally expected to reduce the weight by 3 to 5% |
| | ⑧ the large diameter pile soil effect | applicable to a large diameter single pile foundation with a pile diameter greater than 5 m, the pile soil effect is analyzed by the finite element method to avoid the conservatism of py design method suggested by current specification, and it is generally expected to improve the stiffness by more than 3%, and reduce the load by about 5% |

Specifically, when adopting the method to perform the cost-reducing optimization design of the existing structure location, it needs to formulate a strict project implementation plan taking into consideration the requirements of the actual project procurement, material preparation, feed intake, manufacturing, single pile construction, transportation and installation period, vessel resources, human resources of the main engine plant and the design institute, and grid connection time.

The wind farm adopts a 4.5 MW unit, has a capacity of 300 MW, a foundation top elevation of 13 m, a hub center height of 94 m, and a tower bottom diameter of 5.5 m, and has three tower segments with a height of a bottom segment being 15 m, a height of a middle segment being 33 m and a height of a top segment being 33 m. The current structure frequency is 0.235 Hz, and an applicable frequency range proposed by the main engine manufacturer is 0.235 Hz to 0.320 Hz.

According to the flow chart given in FIG. 2, the implementing operations are as follows.

1) Start the design.
2) Determine and update environmental parameters of a structure location.
3) A water depth and foundation stiffness of the selected structure location belong to a better position in the whole field.
4) Analyze the rationality of the current design: no. The current design is constrained by the frequency requirement, and there are margins for other ultimate strength, fatigue strength, and deformation requirements.
5) Determine whether the ultimate strength is a single control factor: no.
6) Determine whether the fatigue strength is a single control factor: no.
7) Determine whether the deformation requirement is a single control factor: no.
8) Determine whether the frequency requirement is a single control factor: yes. Considering that the single pile is constructed at present, and the main steel plate has been purchased but not yet manufactured, so the optimization is performed only by two methods, i.e., by (9) adjusting the tower configuration, and ⑩ adjusting the tower and the single pile diameter.
9) Adopt the load-control-tower-foundation integrated iterative design. Return to step 4.
10) Analyze the rationality of the current design: yes.
11) Determine whether the ultimate strength is a single control factor: no.
12) Determine whether the fatigue strength is a single control factor: no.
13) Determine whether the deformation requirement is a single control factor: no.

14) Determine whether the frequency requirement is a single control factor: no.

15) Determine whether the local and global buckling of the structure is a control factor: no.

16) End the design.

Table 3 shows comparison of solutions before and after the optimization design. As can be seen from the table 3, the solution before the optimization has one straight segment, and the solution after the optimization has two straight segments. The diameter of the single pile before the optimization is 6.50 m, and the diameter of the single pile after the optimization is 6.30 m. The frequency after the optimization is still 0.235 Hz. Taking into consideration the construction period, the main engine manufacturer is not required to adopt other technical methods such as ⑪ releasing the frequency range to 1P and 3P control.

Through the optimization, the weight of the tower of a single unit is increased by 2.3 t, the weight of the single pile is reduced by 64.5 t, and the total weight of the single tower and the single pile foundation is reduced by 62.2 t. Based on the wind farm of 300 MW with a total of 60 units, and the cost of per ton of material being 13,000 RMB, the cost of the material can be saved by 53.9 million RMB in total.

Table 3. Comparison of solutions before and after the optimization

| Solution Comparison | Original design | Optimized design | Note |
|---|---|---|---|
| Tower weight (t) | 209.8 | 212.1 | increasing 2.3 t |
| Single pile weight (t) | 834.6 | 770.1 | reducing 64.5 t |
| Overall weight (t) | 1014.4 | 982.2 | A weight of the single unit is reduced by 62.2t |
| Height of straight segment of tower (m) | 15.0 | 48.0 | |
| Diameter of tower bottom (m) | 5.50 | 5.50 | |
| Diameter of single pile at mud surface (m) | 6.50 | 6.30 | |
| Load of tower bottom with safety factor (ten thousand kN.m) | 11.17 | 10.99 | |
| Load of tower bottom without safety factor (ten thousand kN.m) | 10.42 | 9.39 | |
| Equivalent fatigue load of tower bottom (ten thousand kN.m) | 2.47 | 2.61 | |
| Frequency requirement (Hz) | 0.235-0.320 | 0.235-0.320 | |

**Required time conditions**

At least 7 months are required for design, procurement, transportation and manufacture before the installation.

**Required scene conditions**

The main engine plant and the design institute promised to provide customized design, drawings of accessories inside the tower need to be redrawn by the main engine plant, which takes about 2 to 3 months.

The construction sequence and grid connection time are considered. Considering that the current national subsidy time requires all units in the whole farm to be connected to the grid, and steel plates, accessories and flanges have been purchased for the project under construction, direct implementation will affect the progress of the project.

The integrated design technical solution is recommended to be used in a scene where a form of a single pile foundation is used for a water depth of about 10 to 20 m, and it is expected that the weight reduction can reach 10%.

**Implementation steps of the solution**

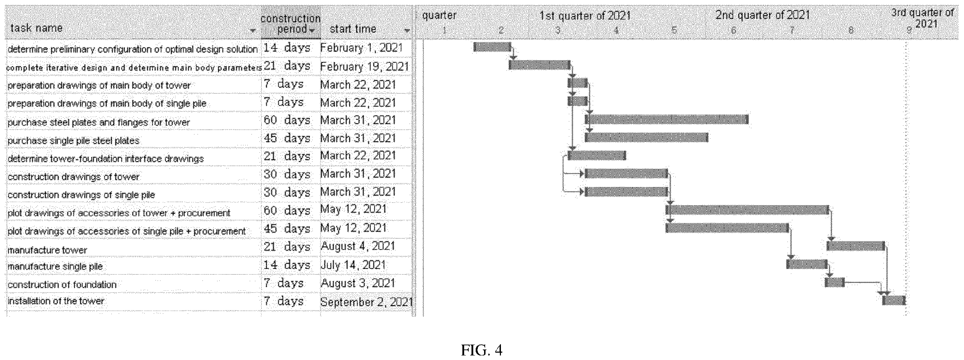

A Gantt chart of the project is shown in FIG. 4, which includes:

a) determining an optimal design solution (14 days);

b) completing an iterative design and determining design parameters of the main bodies of the tower and the foundation (21 days);

c) completing material preparation drawings of the main body of the tower (7 days) and material preparation drawings of the main body of the single pile (7 days);

d) determining tower-foundation interface drawings (21 days);

e) purchasing steel plates and flanges (60 days) and purchasing the single pile steel plates (45 days);

f) plotting construction drawings of the tower (30 days) and plotting construction drawings of the single pile (30 days);

g) plotting drawings of accessories of the tower and procurement (60 days), plotting drawings of accessories of the single pile and procurement (45 days);

h) manufacturing and assembling the tower on land (21 days);

i) manufacturing the single pile (14 days);

j) installing the tower and the unit (7 days).

The present disclosure provides the estimated time, the accurate design and procurement time is to be determined depending on the supplier's ability, the schedule of the construction period, weather, and other conditions. The integrated design method of the present disclosure can find the global optimal design with the lightest overall support structure, which is an effective method to reduce the cost per kilowatt hour of offshore wind power generation. Bidding rules for foundation engineering solutions of wind turbine manufacturers will be formulated in the bidding phase of the offshore wind power, and in the detailed design stage, the integrated experimental design solution will be required to find the global optimal design with the minimum total mass of the tower and the single pile.

## Claims

1. An integrated cost-reducing optimization design method for an offshore wind turbine support structure, **characterized by** comprising:

   step 1, determining environmental parameters of a structure location;

   step 2, determining whether a water depth and foundation stiffness of the structure location reach respective preset points in a wind field in which it is located or in a partition in which it is located, if no, executing step 3; if yes, executing step 4;

   step 3, executing ① updating the structure location and its environmental parameters, according to a construction sequence, the water depth of the structure location and geological condition information of the offshore wind turbine support structure, and then returning to step 1;

   step 4, analyzing whether an ultimate strength, a fatigue strength, a deformation requirement, a frequency requirement, a diameter-thickness ratio and a pile length in a current design of the offshore wind turbine support structure are less than set values; if yes, executing step 11, if no, executing step 5;

   step 5, determining whether the ultimate strength is a single control factor, if no, executing step 6; if yes, performing optimization by ② adopting an integrated load and/or (3) adopting an optimal control strategy, and executing step 10;

   step 6, determining whether the fatigue strength is a single control factor: if no, executing step 7; if yes, performing optimization by ② adopting the integrated load, ③ adopting the optimal control strategy, ④ improving a damping ratio, ⑤ using a damper and ⑥ adopting a new nailing process, and executing step 10;

   step 7, determining whether the deformation requirement is a single control factor: if no, executing step 8; if yes, performing optimization by ② adopting the integrated load, (3) adopting the optimal control strategy, and ⑦ adopting a cumulative deformation algorithm of a mud surface, and executing step 10;

   step 8, determining whether the frequency requirement is a single control factor: if no, executing step 9; if yes, performing optimization by ⑧ adopting a large diameter pile soil effect, ⑨ adjusting a tower configuration, ⑩ adjusting a tower, a foundation diameter and a root opening, ⑪ releasing a frequency range to 1P and 3P control, and ⑫ performing fine processing of geological prospecting parameters, and executing step 10;

   step 9, determining whether the diameter-thickness ratio and the pile length are control factors: if no, executing step 11; if yes, performing optimization by (13) increasing the diameter-thickness ratio and ⑭ shortening the pile length, and executing step 10;

   step 10, performing a load-control-tower-foundation integral design; and

   step 11, obtaining a result of the design and finishing the design.

2. The method of claim 1, **characterized in that** a load-control-tower-foundation iterative design process in step 10 comprises:

S1, predicting a load according to a tower configuration, a tower base and a single pile diameter;

S2, giving an initial design of the tower and the foundation, comprising segmentation, a diameter, a wall thickness, and an alignment, the alignment being an outer diameter alignment, an inner diameter alignment, or a middle diameter alignment;

S3, performing an integrated modeling and an integrated load calculation by using Bladed;

S4, performing optimization of a tower structure design and optimization of a foundation structure design simultaneously;

S5, checking whether a convergence criterion is satisfied, which mainly comprises: whether unit adaptability is satisfied, wherein the unit adaptability comprises an ultimate strength and a fatigue strength of a blade, a main bearing, a variable pitch bearing, a yaw bearing, a generator and a base; whether a difference in two adjacent frequencies of the support structure obtained is within 1%, and whether a difference in two adjacent qualities of the support structure obtained is within 1%;

S6, if satisfying the convergence criterion, finishing the iterative design; if no, performing an integrated optimized design of the control strategy, the tower and the foundation structure with the following optimization formulas, and returning an optimized result to S3:

$$
\begin{aligned}
\mathrm{find:} \quad & [x_1, x_2, x_3 \ldots] \\
\mathrm{min:} \quad & m_{tower+single\ pile} \\
\mathrm{subject\ to:} \quad & SRF_{1,2,3,4,5} \geq 1 \\
& \min\left(SRF_6\left(\theta\right)\right) \geq 1 \\
& Q_E \leq Q_d \\
& UC \leq 1 \\
& Damage \leq 1 \\
& \Delta_\theta \leq 0.25^\circ
\end{aligned}
$$

where $[x_1, x_2, x_3 \ldots]$ is parameters of a wall thickness of the tower, a wall thickness of the single pile, and yaw, variable pitch and torque control strategies; $m_{tower+single\ pile}$ is a total mass of the tower and the single pile; and

S7, finishing the iterative design and outputting response values, the response values comprising a mass of the tower, a mass of the single pile, a frequency, and an ultimate load and a fatigue load of the tower base.

3. The method of claim 2, **characterized in that** the integrated modeling comprises both inputting an environmental condition and building a model of the support structure when performing the integrated modeling and the integrated load calculation by using Bladed, wherein the environmental condition comprises wind resource parameters, ocean hydrographic parameters, engineering geological parameters, and other special operating conditions comprising sea ice, an earthquake or a typhoon; the model of the support structure comprises a head, a tower and a foundation, wherein the foundation comprises a portion below the mud surface.

4. The method of claim 1, **characterized in that** in the optimization method, measures of ① updating the structure location and its environmental parameters, (3) adopting the optimal control strategy, and (9) adjusting the tower configuration are applicable to all offshore wind turbines.

5. The method of claim 1, **characterized in that** in the optimization method, ② adopting the integrated load is applicable to service conditions with large water depth and wave force, and the measure of (9) adjusting the tower configuration is applicable to all foundation structures.

6. The method of claim 1, **characterized in that** in the optimization method, the measure of ⑩ adjusting the tower, the foundation diameter and the root opening is applicable to operating conditions with a large water depth and an uneven variation in a structure diameter and a stiffness,

⑪ releasing the frequency range to 1P and 3P control is applicable to operating conditions where a control factor is a frequency range given by a main engine plant and is narrower than [1P×110%, 3P×90%] given by a specification, and

the measure of ⑫ performing the fine processing of geological prospecting parameters is applicable to an operating condition where the structure is controlled by a frequency.

7. The method of claim 1, **characterized in that** in the optimization method, (5) using the damper is applicable to an operating condition where the structure is controlled by fatigue, and first and second order dampers are adopted to reduce a load, the measure of ⑥ adopting the new nailing connection is applicable to an operating condition where the tower is completely controlled by the fatigue strength, the measure of (13) increasing the diameter-thickness ratio is applicable to an operating condition where the wall thickness of the single pile is controlled by a construction requirement, and the wall thickness is reduced by increasing D/t, and the measure of ⑭ shortening the pile length is applicable to an operating condition where the pile length is designed robustly.

8. The method of claim 1, **characterized in that** in the optimization method, the measure of (A) improving the damping ratio is applicable to a scene where the structure is controlled by fatigue, the measure of ⑦ adopting the cumulative deformation algorithm of the mud surface is applicable to a scene controlled by a mud surface corner, and the cumulative deformation algorithm of the mud surface is adopted to reduce a load by combining the ultimate strength and the fatigue strength; ⑧ adopting the large diameter pile soil effect is applicable to a large diameter single pile foundation with a pile diameter greater than 5 m.

FIG. 1a

FIG. 1b

FIG. 2

FIG. 3

| task name | construction period | start time |
|---|---|---|
| determine preliminary configuration of optimal design solution | 14 days | February 1, 2021 |
| complete iterative design and determine main body parameters | 21 days | February 19, 2021 |
| preparation drawings of main body of tower | 7 days | March 22, 2021 |
| preparation drawings of main body of single pile | 7 days | March 22, 2021 |
| purchase steel plates and flanges for tower | 60 days | March 31, 2021 |
| purchase single pile steel plates | 45 days | March 31, 2021 |
| determine tower-foundation interface drawings | 21 days | March 22, 2021 |
| construction drawings of tower | 30 days | March 31, 2021 |
| construction drawings of single pile | 30 days | March 31, 2021 |
| plot drawings of accessories of tower + procurement | 60 days | May 12, 2021 |
| plot drawings of accessories of single pile + procurement | 45 days | May 12, 2021 |
| manufacture tower | 21 days | August 4, 2021 |
| manufacture single pile | 14 days | July 14, 2021 |
| construction of foundation | 7 days | August 3, 2021 |
| installation of the tower | 7 days | September 2, 2021 |

FIG. 4

## INTERNATIONAL SEARCH REPORT

| International application No. |
|---|
| **PCT/CN2021/114892** |

| A. | CLASSIFICATION OF SUBJECT MATTER |
|---|---|

G06F 119/14(2020.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, CNABS, CNKI, DWPI, SIPOABS: 海上, 风机, 支撑, 整体化, 优化, 环境, 强度, 疲劳, 变形, 频率, offshore, wind turbine, support, integrate, optimization, envionment, density, fatigue, distort, frequency

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 102926399 A (GUODIAN UNITED POWER TECHNOLOGY CO., LTD.) 13 February 2013 (2013-02-13)<br>entire description | 1-8 |
| A | CN 109918786 A (LONGYUAN (BEIJING) WIND POWER ENGINEERING DESIGN CONSULTING CO., LTD.) 21 June 2019 (2019-06-21)<br>entire description | 1-8 |
| A | CN 101571100 A (OCEAN UNIVERSITY OF CHINA) 04 November 2009 (2009-11-04)<br>entire description | 1-8 |
| A | EP 3578809 A1 (INNOGY SE) 11 December 2019 (2019-12-11)<br>entire description | 1-8 |
| PX | CN 113239483 A (CLEAN ENERGY RESEARCH INSTITUTE CO., LTD., CHINA HUANENG GROUP et al.) 10 August 2021 (2021-08-10)<br>claims 1-8, and entire description | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 January 2022** | **29 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/114892**

| Patent document cited in search report | | | Publication date (day/month/year) | Patent family member(s) | | | Publication date (day/month/year) |
|---|---|---|---|---|---|---|---|
| CN | 102926399 | A | 13 February 2013 | CN | 102926399 | B | 12 November 2014 |
| CN | 109918786 | A | 21 June 2019 | None | | | |
| CN | 101571100 | A | 04 November 2009 | CN | 101571100 | B | 05 January 2011 |
| EP | 3578809 | A1 | 11 December 2019 | TW | 202001087 | A | 01 January 2020 |
| | | | | DE | 102018113633 | A1 | 12 December 2019 |
| CN | 113239483 | A | 10 August 2021 | None | | | |

Form PCT/ISA/210 (patent family annex) (January 2015)

**REFERENCES CITED IN THE DESCRIPTION**

**Patent documents cited in the description**

- CN 202110462452